# EUROPEAN PATENT APPLICATION

(11) **EP 4 745 695 A1**
(43) Date of publication of application: **20.05.2026**
(21) Application number: 23952109.9
(22) Date of filing: 18.12.2023
(51) Int. Cl.: G05B 19/418

(54) **SAFETY CONTROL SYSTEM AND METHOD FOR BATTERY PRODUCTION LINE**

(30) Priority: 15.09.2023 CN 202311190737
(71) Applicant: Contemporary Amperex Technology Co., Limited, Ningde, Fujian 352100 (CN)
(72) Inventor: WU, Kai, Ningde, Fujian 352100 (CN); DUAN, Minmin, Ningde, Fujian 352100 (CN); CHEN, Guochao, Ningde, Fujian 352100 (CN); LUO, Jian, Ningde, Fujian 352100 (CN)
(74) Representative: Ran, Handong
(86) International application number: PCT/CN2023/139597
(87) International publication number: WO 2025/055187

(57) **Abstract**

Provided are a safety control system and method for a battery production line. The battery production line comprises at least one independent safety region. The safety control system at least comprises a safety control unit (201) in a safety region, a production device, and a safety relay (202) corresponding to the production device, wherein the production device at least comprises a robot (203); the safety control unit (201) is configured to generate a safety control signal in response to a safety trigger event; the safety relay (202) is connected to the safety control unit (201) and is configured to send a turn-off control signal to a controller of the robot (203) in response to the safety control signal; and the controller of the robot (203) is connected to the safety relay (202) and is configured to control, in response to the turn-off control signal, the robot (203) to be in a safe state.

## Description

### CROSS-REFERENCE TO RELATED APPLICATION

The present disclosure is based on Chinese Patent Application No. 202311190737.X filed on September 15, 2023 and entitled "SAFETY CONTROL SYSTEM AND METHOD FOR BATTERY PRODUCTION LINE", and claims priority to the China patent application, the entire content of which is hereby incorporated into the present disclosure as a reference.

### TECHNICAL FIELD

Embodiments of the present disclosure relate to the technical field of safety control, and relate to, but are not limited to, a safety control system and method for a battery production line.

### BACKGROUND

New energy batteries are increasingly more widely applied in life and industry. For example, new energy vehicles equipped with batteries have been widely used. In addition, batteries are increasingly applied in the fields of energy storage and the like.

Safety control over a production line typically refers to emergency stop control thereof. This means that when a safety hazard of personnel and devices occurs, by pressing an emergency stop button on a console or relying on the logical judgment within a Programmable Logic Controller (PLC), a frequency converter or motor of the production line is stopped, and the power supply to the proportional valves and solenoid valves is simultaneously cut off to ensure the safety of both the personnel and the devices on the production line.

Currently, in the production process of power lithium battery modules, there are various processes and various devices used. The production line for producing power lithium battery module products is divided into many sub-regions to complete the production of battery products in all process sections. Therefore, how to conduct safety control between the sub-regions, the process sections, and the devices to ensure the safety of the personnel working for the production line and achieve fast and safe production of the production line is an urgent problem that needs to be solved at present.

### SUMMARY OF THE INVENTION

To solve the problems existing in the related art, embodiments of the present disclosure provide a safety control system and method for a battery production line, which can achieve safe and rapid production of the production line and also ensure the safety of personnel and devices working for the production line.

In a first aspect, the present disclosure provides a safety control system for a battery production line, the battery production line includes at least one independent safety region, the safety control system at least includes a safety control unit, a production device, and a safety relay corresponding to the production device in the safety region, and the production device at least includes a robot, where the safety control unit is configured to generate a safety control signal in response to a safety trigger event; the safety relay is connected to the safety control unit and configured to send a shutdown control signal to a controller of the robot in response to the safety control signal; and the controller of the robot is connected to the safety relay and configured to control, in response to the shutdown control signal, the robot to be in a safe state.

In the above embodiment, the battery production line is partitioned, and the safety trigger event in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

In some embodiments, the safety control system further includes a safety detection unit arranged in the safety region; the safety detection unit is connected to the safety control unit and configured to detect an entrance of the safety region and obtain a detection result; and the safety detection unit is further configured to generate the safety trigger event in response to the detection result indicating that a detection object enters the safety region from the entrance of the safety region, and send the safety trigger event to the safety control unit.

In the above embodiment, the entrance of the safety region is detected by a sensor. When the detection object enters the safety region through the entrance, the safety trigger event is generated. The safety control unit controls the robot in the safety region in response to the safety trigger event, thereby ensuring the safety of the devices, operators and maintenance personnel of the production line.

In some embodiments, the safety control unit is further configured to generate the safety control signal in response to an entry instruction sent by a transport cart, where the transport cart is configured to transport materials of the battery production line.

In the above embodiment, in response to the entry instruction of the transport cart, safety control is performed on the production device and the robot in the safety region to prevent the production device and the robot from causing harm to the materials on the moving transport cart, thereby ensuring the safe production of the production line.

In some embodiments, the controller of the robot is further configured to control, in response to the shutdown control signal, the robot to be in a stop state or move to a safe position.

In the above embodiment, safety control is performed on the robot in the safety region, so that safety isolation is achieved between the robot and the devices and personnel in the safety region, thereby ensuring the safety of the devices, operators and maintenance personnel of the production line.

In some embodiments, the safety region includes at least two production devices, and the robot is provided with a robot control unit; the controller of the robot is configured to generate a robot control signal in response to a control operation for the robot control unit; and the safety relay is also configured to send the shutdown control signal to production devices in the safety region other than the robot in response to the robot control signal sent by the controller of the robot.

In the above embodiment, by arranging the robot control unit on a robot body, the safety control unit controls other production devices in the safety region based on the control signal of the robot body, thereby achieving safe production of the production line.

In some embodiments, the at least one independent safety region includes a first safety region and a second safety region adjacent to each other; a safety control unit of the first safety region is configured to generate a safety control signal of the first safety region in response to a safety trigger event of the first safety region; and a safety control unit of the second safety region is configured to receive the safety control signal sent by the safety control unit of the first safety region, and generate a safety control signal of the second safety region in response to the safety control signal of the first safety region.

In the above embodiment, when the safety trigger event occurs in the previous safety region, the next safety region may also perform safety control based on the safety trigger event, so as to avoid the problem that materials output from the previous safety region collide with the robot moving in the safety region when entering the next safety region, which causes damage to the materials and inability to carry out subsequent processes, thereby improving the production reliability of production line.

In some embodiments, the production device also includes a cylinder and a motor; the controller of the robot, a controller of the cylinder, and a controller of the motor are respectively connected to different safety relays; the safety relay connected to the controller of the cylinder is configured to send the shutdown control signal to the controller of the cylinder in response to the safety control signal; and the safety relay connected to the controller of the motor is configured to send the shutdown control signal to the controller of the motor in response to the safety control signal.

In the above embodiment, the interlocking control scheme of the safety control system is used to separately perform safety control on the at least two production devices on the production line, thereby improving the control efficiency and ensuring the safe production of the production line.

In a second aspect, the present disclosure provides a safety control method for a battery production line, applied to a safety control method for a battery production line. The battery production line includes at least one independent safety region, the safety control system at least includes a safety control unit, a production device, and a safety relay corresponding to the production device in the safety region, and the production device at least includes a robot, where the method includes: generating, by the safety control unit, a safety control signal in response to a safety trigger event; sending, by the safety relay, a shutdown control signal to a controller of the robot in response to the safety control signal; and controlling, by the controller of the robot in response to the shutdown control signal, the robot to be in a safe state.

In the above embodiment, the battery production line is partitioned, and the safety trigger event in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

In some embodiments, the safety control system further includes a safety detection unit arranged in the safety region. The method further includes: detecting, by the safety detection unit, an entrance of the safety region and obtaining a detection result; generating, by the safety detection unit, the safety trigger event in response to the detection result indicating that a detection object enters the safety region from the entrance of the safety region, and sending the safety trigger event to the safety control unit.

The entrance of the safety region is detected by a sensor. When the detection object enters the safety region through the entrance, the safety trigger event is generated. The safety control unit controls the robot in the safety region in response to the safety trigger event, thereby ensuring the safety of the devices, operators and maintenance personnel of the production line.

In some embodiments, the safety region includes at least two production devices, and the robot is provided with a robot control unit. The method further includes: generating, by the controller of the robot, a robot control signal in response to a control operation for the robot control unit; and sending, by the safety relay, the shutdown control signal to production devices in the safety region other than the robot in response to the robot control signal sent by the controller of the robot.

In the above embodiment, by arranging the robot control unit on a robot body, the safety control unit controls other production devices in the safety region based on the control signal of the robot body, thereby achieving safe production of the production line.

The above description is only a summary of the technical solutions of the present disclosure, and in order to understand more clearly the technical means of the present disclosure for implementing them in accordance with the contents of the specification, and in order to make the above and other objectives, features and advantages of the present disclosure more apparent and readily understandable, detailed description of the present disclosure are hereby set forth below.

### BRIEF DESCRIPTION OF DRAWINGS

FIG. 1 is a schematic diagram of safety region division of a battery production line according to an embodiment of the present disclosure;
FIG. 2 is a schematic diagram 1 of a safety control system for a battery production line according to an embodiment of the present disclosure;
FIG. 3 is a schematic diagram 2 of the safety control system for a battery production line according to an embodiment of the present disclosure;
FIG. 4 is an optional schematic flow diagram of a safety control method for a battery production line according to an embodiment of the present disclosure;
FIG. 5 is a schematic diagram of a safety control principle according to an embodiment of the present disclosure;
FIG. 6 is a schematic diagram of a safety control principle of a robot according to an embodiment of the present disclosure;
FIG. 7 is a schematic diagram of a safety control principle of a valve terminal according to an embodiment of the present disclosure;
FIG. 8 is a schematic diagram of a safety control principle of a remote input/output (I/O) module according to an embodiment of the present disclosure; and
FIG. 9 is a schematic diagram of a safety control principle of a frequency converter and a servo controller according to an embodiment of the present disclosure.

### DETAILED DESCRIPTION

In order to make the objectives, technical solutions and advantages of the present disclosure clearer, the present disclosure will be further elaborated in detail below in combination with the drawings. The described embodiments should not be regarded as limitations to the present disclosure, and all other embodiments obtained by those of ordinary skills in the art without making creative efforts fall within the scope of protection of the present disclosure.

In the following description, "some embodiments" are involved, which describe a subgroup of all possible embodiments, but it is to be understood that "some embodiments" may be the same or different subsets of all possible embodiments and may be combined with each other without conflict. Unless otherwise defined, all technical and scientific terms used in the embodiments of the present disclosure have the same meanings as those commonly understood by those skilled in the art to which the embodiments of the present disclosure belong. The terms used in the embodiments of the present disclosure are for the purpose of describing embodiments of the present disclosure only and are not intended to limit the present disclosure.

At present, new energy batteries are increasingly applied in daily life and industry. New energy batteries are not only applied in energy storage power supply systems such as water power, fire power, wind power, and solar power stations, but also widely applied in electric transportation tools, such as electric bicycles, electric motorcycles and electric vehicles, as well as many fields such as aerospace. With the continuous expansion of the application field of the power batteries, the market demand is also constantly expanding.

In an embodiment of the present disclosure, a battery may be a battery cell. The battery cell refers to a basic unit that can realize mutual conversion of chemical energy and electrical energy, and may be used to make a battery module or a battery pack to provide power to an electrical apparatus. The battery cell may be a secondary battery, and the secondary battery refers to a battery cell that can be used continually by activating an active material by means of charging after the battery cell is discharged. The battery cell may be a lithium-ion battery, a sodium-ion battery, a sodium/lithium-ion battery, a lithium-metal battery, a sodium-metal battery, a lithium-sulfur battery, a magnesium-ion battery, a nickel-metal hydride battery, a nickel-cadmium battery, a lead storage battery, and so forth, which is not limited in the embodiments of the present disclosure.

At present, in the production process of power lithium battery modules, the products are produced in various process sections through different sub-regions. However, materials need to be transported in and out of different regions, and different robots may be used in the different sub-regions to transport, process or detect the materials. Technicians may also work for the production line to debug or program devices. Therefore, how to ensure that battery materials will not cause damage to the devices on the production line when being transported in and out of the different sub-regions, moving robots will not damage the materials, and the devices and robots running on the production line will not cause harm to the technicians is a problem that needs to be solved at present.

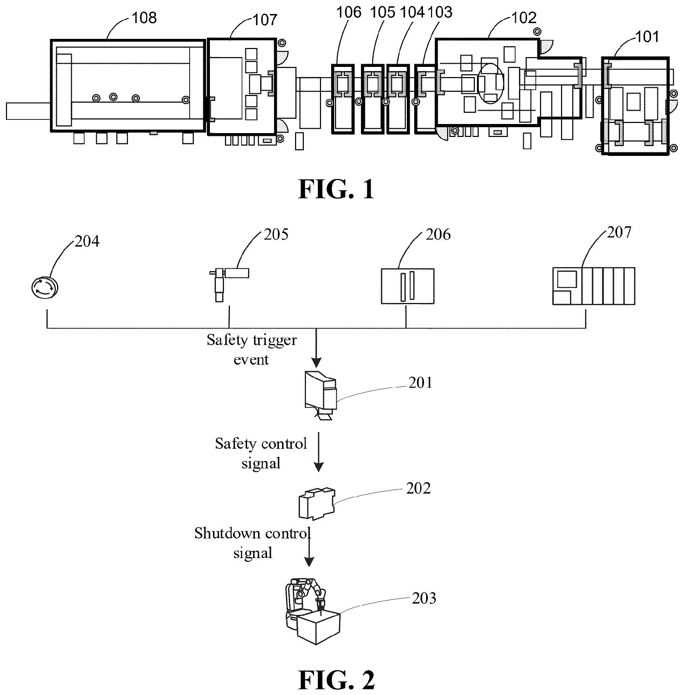

Based on the above considerations, in order to solve the problem of safe production of a battery production line, a safety control scheme for devices of a power lithium battery module production line can be implemented from two aspects: safety region division and safety control principles of safety regions. FIG. 1 is a schematic diagram of safety region division of a battery production line according to an embodiment of the present disclosure. As shown in FIG. 1, the battery module production line is divided into eight subdivided safety regions, such as a first safety region 101 to an eighth safety region 108 in FIG. 1, where the first safety region 101 can be configured to implement a loading process of the battery module production line, and a production device in the first safety region 101 is a loading device; the second safety region 102 can be configured to implement processes such as battery cell grouping, battery cell side surface gluing, gluing detection, battery cell small unit grouping and battery cell large surface mounting, and a production device in the second safety region 102 is a large surface gluing device; the third safety region 103 to the sixth safety region 106 (i.e., the third safety region 103, the fourth safety region 104, the fifth safety region 105, and the sixth safety region 106) can be configured to implement an end surface gluing process of the battery cell, and a production device in the third safety region 103 to the sixth safety region 106 is an end surface gluing device; the seventh safety region 107 can be configured to implement a stacking process of the battery cell, and a production device in the seventh safety region 107 is a stacking device; and the eighth safety region 108 can be configured to implement a module pressurization process of the battery cell, and a production device in the eighth safety region 108 is a pressurizing device.

Each safety region is enclosed by a fence, and safety components such as a light curtain and a roller shutter door are installed at an entrance and an exit for materials. Such safe partitioning is mainly to ensure that operation in each safety region is independent and to prevent the situation that operation personnel accidentally enter an operation region and then safety injuries are caused. Secondly, as shown in FIG. 1, each safety region is equipped with a safety-related safety component such as an emergency stop device and a safety door lock. The main function of the installation apparatuses is to safely stop the devices in an emergency state and to safely stop the devices when personnel for the devices enter the safety region to repair and maintain the devices.

In embodiments of the present disclosure, the emergency stop device is a safety device arranged on the production line, which is mainly configured to stop running of machines or devices on the production line in an emergency to ensure the safety of the personnel and devices. When an emergency occurs, a technician working at the production line presses an emergency stop switch, which will immediately disconnect the power supply and power transmission of the machines or devices on the production line, causing the machines or devices to stop running. After the machines or devices are stopped, the emergency stop switch needs to be manually restored to restart the machines or devices.

The safety door lock is arranged on a safety door of each safety region. If the safety door is opened, a safety control unit controls, in response to a safety trigger event corresponding to the safety door lock, the machines and devices on the production line to ensure the safety of people or devices entering through the safety door.

In some embodiments, a safety light curtain is a non-contact safety protection device on the production line, which includes an infrared sensor. The safety light curtain can create an invisible optical barrier between an operator and a designated region in the safety region, thus ensuring a safe distance between a worker and the machines. When it is detected through infrared rays that materials or other devices enter through the light curtain, the safety control unit may perform safety control on the machines or devices in the safety region.

In some embodiments, the roller shutter door is also a safety barrier that separates a dangerous region from an operating region in the safety region. If the roller shutter door is opened, the safety control unit may perform safety control on the machines or devices in the safety region.

A safety control system according to an embodiment of the present disclosure can be used not only in the production process of lithium batteries, but also in any automated production line to achieve safe production of the production line.

A safety control method for a battery production line according to an embodiment of the present disclosure is implemented through the safety control system. The battery production line includes at least one independent safety region. The safety control system at least includes a safety control unit, a production device, and a safety relay corresponding to the production device in the safety region. The production device at least includes a robot, wherein the safety control unit may refer to any one of a Programmable Logic Controller (PLC), a single-chip microcomputer, an intermediate computer, and an upper computer. The safety control unit may include a processor and a memory storing a processor-executable instruction. When the instruction is executed by the processor, the safety control method according to the embodiment of the present disclosure is implemented. The production device refers to a device in each safety region of the production line. For example, the production device in the safety region corresponding to a loading process is a loading robot, a device running through a cylinder, or a loading device running through a motor. The safety relay can be treated as a control switch, configured to receive a control signal sent by the safety control unit in response to the safety trigger event corresponding the emergency stop device, the safety door, the light curtain, or the roller shutter door. The safety relay then sends the control signal to various electrical devices on the production line through a passive contact to perform safety control for the various electrical devices on the production line.

FIG. 2 is a safety control system for a battery production line according to an embodiment of the present disclosure. As shown in FIG. 2, the production line includes at least one independent safety region. The safety control system at least includes a safety control unit 201, a production device, and a safety relay 202 corresponding to the production device in each safety region. The safety control unit 201 is respectively connected to a safety component such as an emergency stop device 204, a safety door lock 205, a light curtain 206, or a roller shutter door in the safety region. The production device at least includes a robot 203 in the safety region.

The safety control unit 201 is configured to generate a safety control signal in response to a safety trigger event corresponding to at least one safety component such as the emergency stop device 204, the safety door lock 205, the light curtain 206 or the roller shutter door, or a linkage signal 207 between upstream and downstream safety regions. The safety relay 202 is connected to the safety control unit 201 and configured to send a shutdown control signal to a controller of the robot 203 in response to the safety control signal. The controller of the robot 203 is connected to the safety relay 202 and configured to control, in response to the shutdown control signal, the robot 203 to be in a safe state.

Here, the safety trigger event may refer to the safety trigger event corresponding to at least one safety component such as the emergency stop device 204, the safety door lock 205, the light curtain 206 or the roller shutter door in the safety region, for example, a technician presses an emergency stop button of the emergency stop device 204; or a technician opens the safety door lock 205 of the safety region; or materials or an unknown object enters the light curtain 206; or the linkage signal 207 is transmitted between the upstream and downstream safety regions. For example, in the safety region corresponding to two adjacent production processes, when the produced materials need to directly enter the next safety region from the previous safety region, if the safety trigger event occurs in the previous safety region, the next safety region may also obtain the safety control signal corresponding to the safety trigger event in the previous safety region, and perform safety control on the region, thereby avoiding damage to the materials entering the region or devices.

In the embodiment of the present disclosure, the safety relay at least includes a coil, an armature, and a contact spring. When a certain voltage is applied to both ends of the coil, a certain current may flow through the coil, thereby generating an electromagnetic effect, which then drives a movable contact (normally open contact) of the armature to close or a static contact (normally closed contact) to open. Here, if the safety relay is a normally open switch, after the safety relay receives the safety control signal sent by the safety control unit, the coil of the safety relay generates an electromagnetic effect, thereby closing the normally open contact and generating the shutdown control signal to shut down the robot.

Here, the robot may refer to a robot on the battery production line for transporting, assembly, packaging and detection, and the robot moves on the production line. When the safety trigger event occurs in the safety region, in order to prevent the moving robot from causing harm to people or devices entering the safety region, the robot needs to be in a safe state when the safety trigger event occurs, to protect the devices on the production line or the technician currently working at the production line. For example, the safe state may refer to that the robot stops immediately or returns to a safe position, and the safe position is a position where no harm is caused to people or the devices.

In the embodiment of the present disclosure, the battery production line is partitioned, and the safety trigger event in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

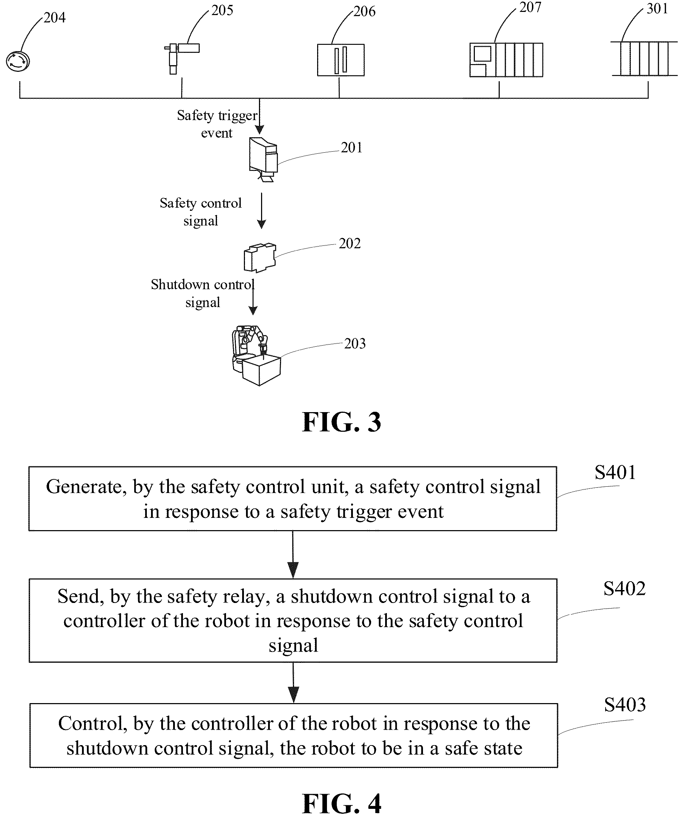

In some embodiments, FIG. 3 is a safety control system for a battery production line according to an embodiment of the present disclosure. As shown in FIG. 3, the safety control system further includes a safety detection unit 301 arranged in the safety region. The safety detection unit 301 is connected to the safety control unit 201 and configured to detect an entrance of the safety region and obtain a detection result. The safety detection unit 301 is also configured to generate a safety trigger event in response to the detection result indicating that a detection object enters the safety region from the entrance of the safety region, and send the safety trigger event to the safety control unit 201.

In some embodiments, the safety detection unit 301 may refer to a safety detection sensor in the safety region, such as, an optical fiber sensor, a light curtain, an industrial camera, or other devices that can detect the detection object. The detection object can be a technician entering the safety region, materials of the production line, or devices moving on the production line. The entrance of the safety region is detected by the safety sensor. When it is detected that the detection object enters the safety region through the entrance, the safety detection unit generates the detection result. In response to the detection result indicating that any detection object currently enters the safety region from the entrance of the safety region, the safety detection unit generates the safety trigger event and sends the safety trigger event to the safety control unit 201. The safety control unit 201 generates a safety control signal and sends a shutdown control signal to the controller of the robot based on the safety relay to control the robot in the safety region to be in a safe state, so as to prevent the robot from causing harm to the technician entering the safety region from the entrance, the materials of the production line, or the devices moving on the production line.

In this way, in the embodiment of the present disclosure, the entrance of the safety region is detected by the sensor. When the detection object enters the safety region through the entrance, the safety trigger event is generated. The safety control unit controls the robot in the safety region in response to the safety trigger event, thereby ensuring the safety of the devices, operators and maintenance personnel of the production line.

In some embodiments, the materials are transported between different safety regions and different workstations of the production line by a transport cart on the production line, namely, an Automatic Guided Vehicle (AGV). The AGV automatically selects, determines and plans a most appropriate transport route based on the priority sequence of different workstations on the battery production line. Every time the AGV enters a workstation in the safety region, the AGV may send an entry instruction to the safety control unit corresponding to the safety region. The safety control unit generates the safety control signal in response to the entry instruction sent by the transport cart, and sends the shutdown control signal to the controller of the robot based on the safety relay to control the robot in the safety region to be in the safe state.

In some embodiments, the entry instruction may also include a running route of the transport cart in the current safety region. After receiving the entry instruction, the safety control unit controls, according to the running route of the transport cart, the robot on the production line to avoid the transport cart to protect the materials.

In the embodiment of the present disclosure, in response to the entry instruction of the transport cart, safety control is performed on the production device and the robot in the safety region to prevent the production device and the robot from causing damage to the materials on the moving transport cart, thereby ensuring the safe production of the production line.

In some embodiments, after receiving the shutdown control signal, the controller of the robot controls the robot to be in a stop state or move to a safe position. Here, controlling the robot to be in a stop state means that the controller of the robot controls the robot to stop in the current posture after receiving the shutdown control signal. The safe position can refer to a home position of the robot in the current safety region or current workstation. At the safe position, the robot may not cause harm to the devices and technicians in the safety region. Controlling the robot to move to a safe position means that the controller of the robot controls the robot to stop the current operation and automatically move to the safe position after receiving the shutdown control signal.

In the embodiment of the present disclosure, safety control is performed on the robot in the safety region, so that safety isolation is achieved between the robot and the devices and personnel in the safety region, thereby ensuring the safety of the devices, operators and maintenance personnel of the production line.

In some embodiments, the safety region includes at least two production devices, and a robot control unit may also be arranged on a robot body. The robot control unit may refer to an emergency stop button arranged on the robot body. When the operator enters the safety region, he/she can manually press the robot control unit on the robot body. The controller of the robot generates the safety trigger event for the pressing operation. The safety control unit in the safety region performs safety control on the devices in the safety region in response to the safety trigger event.

In some embodiments, the controller of the robot is configured to generate a robot control signal (i.e., an emergency stop signal of the robot body) in response to a control operation for the robot control unit. The safety control unit sends the robot control signal to the safety relay, and the safety relay is further configured to send the shutdown control signal to production devices in the safety region other than the robot in response to the robot control signal sent by the controller of the robot. That is to say, when entering the safety region, the technician can press the emergency stop button arranged on any robot body in the safety region. At this time, the safety control unit of the safety region receives the control signal sent by the robot, and then performs safety control on other production device in the safety region.

In the embodiment of the present disclosure, by arranging the robot control unit on the robot body, the safety control unit controls other production devices in the safety region based on the control signal of the robot body, thereby achieving safe production of the production line.

In some embodiments, the at least one independent safety region on the battery production line may include a first safety region and a second safety region adjacent to each other. Adjacent can refer to that production process of the two safety regions are continuous. For example, the production process corresponding to the first safety region is addressing before welding, and the production process corresponding to the second safety region is post terminal welding.

In two adjacent safety regions, when the safety trigger event occurs in the previous safety region, the next safety region may also perform safety control based on the safety trigger event, so as to avoid the problem that materials output from the previous safety region collide with the robot moving in the safety region when entering the next safety region, which causes damage to the materials and inability to carry out subsequent processes.

A safety control unit of the first safety region can be configured to generate a safety control signal of the first safety region in response to a safety trigger event of the first safety region; and a safety control unit of the second safety region is configured to receive the safety control signal sent by the safety control unit of the first safety region, and generate a safety control signal of the second safety region in response to the safety control signal of the first safety region, so as to achieve control of upstream and downstream safety signals in the battery production line.

In the embodiment of the present disclosure, when the safety trigger event occurs in the previous safety region, the next safety region may also perform safety control based on the safety trigger event, so as to avoid the problem that materials output from the previous safety region collide with the robot moving in the safety region when entering the next safety region, which causes damage to the materials and inability to carry out subsequent processes, thereby improving the production reliability of production line.

In some embodiments, the production device on the production line also includes a cylinder and a motor. The cylinder can refer to a device on the production line that converts electrical energy into mechanical energy, and can be used in automated devices of the battery production line, such as a robot, a handling device, and a material conveying system. The safety relay controls the safe start/stop of the cylinder by controlling a load output power supply of a valve terminal and a remote input/output (I/O) module connected to the cylinder. The motor is used in the devices corresponding to processes such as batching, stirring, coating, rolling, slitting, die-cutting, winding, lamination, liquid injection, and welding on the battery production line. The safety relay controls the safe start/stop of a frequency converter and a servo controller by controlling shutdown of Safe Torque Off (STO) ports of the frequency converter and the servo controller connected to the motor, thereby controlling the safe start/stop of the motor.

In the embodiment of the present disclosure, the controller of the robot, a controller of the cylinder, and a controller of the motor are respectively connected to different safety relays. That is to say, different production device on the battery production line are connected to different safety relays.

Here, the safety relay connected to the controller of the cylinder is configured to send the shutdown control signal to the controller of the cylinder in response to the safety control signal. Here, the controller of the cylinder can be the valve terminal and the remote I/O module connected to the cylinder. The safety relay controls, in response to the safety control signal, a load DC24V output of the valve terminal to be disconnected, thereby stopping the cylinder from moving and achieving safe control over the action of the valve terminal. The safety relay can also control, in response to the safety control signal, a load DC24V output of the remote I/O module to be disconnected, thereby stopping the cylinder from moving and achieving safe control over the action of the remote I/O module.

In some embodiments, the safety relay connected to the controller of the motor is configured to send the shutdown control signal to the controller of the motor in response to the safety control signal. Here, the controller of the motor can be the frequency converter and the motor servo controller connected to the motor. The safety relay controls, in response to the safety control signal, STO terminals of the frequency converter and the motor servo controller to be disconnected, thereby stopping the motor from moving and achieving safety control over the frequency converter and the motor servo controller.

The embodiments of the present disclosure perform safety control on at least two production devices on the production line through interlock control of the system, thereby improving control efficiency and ensuring safe production of the production line.

Based on the above safety control system for the battery production line. An embodiment of the present disclosure further provides a safety control method for a battery production line. FIG. 4 is an optional schematic flow diagram of the safety control method for the battery production line according to the embodiment of the present disclosure. As shown in FIG. 4, the safety control method for the battery production line can be implemented through S401 to S403.

Step S401: Generating, by the safety control unit, a safety control signal in response to a safety trigger event.

In some embodiments, the battery production line includes at least one independent safety region. The safety control system at least includes a safety control unit, a production device, and a safety relay corresponding to the production device in the safety region. The production device at least includes a robot, wherein the safety control unit may refer to a programmable logic control device, and the production device may refer to a device on the production line, such as a robot, a device running through a cylinder, or a device running through a motor. The safety relay receives a signal sent by the safety control unit in response to the safety trigger event corresponding the emergency stop device, the safety door, the light curtain, or the roller shutter door. The safety relay then sends the signal to various electrical devices through a passive contact.

Step S402: Sending, by the safety relay, a shutdown control signal to a controller of the robot in response to the safety control signal.

Here, the shutdown control signal is used to control the robot to be in a stop state or move to a safe position. The safety relay sends the shutdown control signal to the controller of the robot in response to the safety control signal of the safety control unit.

Step S403: Controlling, by the controller of the robot in response to the shutdown control signal, the robot to be in a safe state.

In the embodiment of the present disclosure, the battery production line is partitioned, and the safety trigger event in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

In some embodiments, the safety control system further includes a safety detection unit arranged in the safety region. The safety control method for a battery production line according to the embodiment of the present disclosure further includes S1 and S2.

S1: Detecting, by the safety detection unit, an entrance of the safety region and obtaining a detection result.

S2: Generating, by the safety detection unit, the safety trigger event in response to the detection result indicating that a detection object enters the safety region from the entrance of the safety region, and sending the safety trigger event to the safety control unit.

In the embodiment of the present disclosure, the entrance of the safety region is detected by a sensor. When the detection object enters the safety region through the entrance, the safety trigger event is generated. The safety control unit controls the robot in the safety region in response to the safety trigger event, thereby ensuring the safety of the devices, operators and maintenance personnel of the production line.

In some embodiments, the safety control unit generates the safety control signal in response to the entry instruction sent by the transport cart, where the transport cart is configured to transport materials of the battery production line.

In some embodiments, the controller of the robot controls, in response to the shutdown control signal, the robot to be in a stop state or move to a safe position.

In some embodiments, the safety region includes at least two production devices, and the robot is provided with a robot control unit. The controller of the robot generates a robot control signal in response to a control operation for the robot control unit; and the safety relay sends the shutdown control signal to production devices in the safety region other than the robot in response to the robot control signal sent by the controller of the robot.

In some embodiments, the at least one independent safety region includes a first safety region and a second safety region adjacent to each other; a safety control unit of the first safety region generates a safety control signal of the first safety region in response to a safety trigger event of the first safety region; and a safety control unit of the second safety region receives the safety control signal sent by the safety control unit of the first safety region, and generate a safety control signal of the second safety region in response to the safety control signal of the first safety region.

In some embodiments, the production device also includes a cylinder and a motor. The controller of the robot, a controller of the cylinder, and a controller of the motor are respectively connected to different safety relays. The safety relay connected to the controller of the cylinder sends the shutdown control signal to the controller of the cylinder in response to the safety control signal. The safety relay connected to the controller of the motor sends the shutdown control signal to the controller of the motor in response to the safety control signal.

An exemplary application of the embodiment of the present disclosure in a real application scenario is described below.

The present disclosure describes the safety control scheme for the devices of the power lithium battery module production line from two aspects: safety region division and the safety control principle. First, the entire line is divided into eight subdivided safety zones (i.e., safety regions). The safety zones are enclosed by fences, and safety components such as a light curtain and a roller shutter door are installed at an entrance and an exit for materials. Such safe partitioning is mainly to ensure that operation in each safety region is independent and to prevent the situation that operation personnel accidentally enter an operation region and then safety injuries are caused. Each safety region is equipped with a safety-related safety component such as an emergency stop device and a safety door lock. The main function of the installation apparatuses is to safely stop the devices in an emergency state and to safely stop the devices when personnel for the devices enter a specified region to repair and maintain the devices.

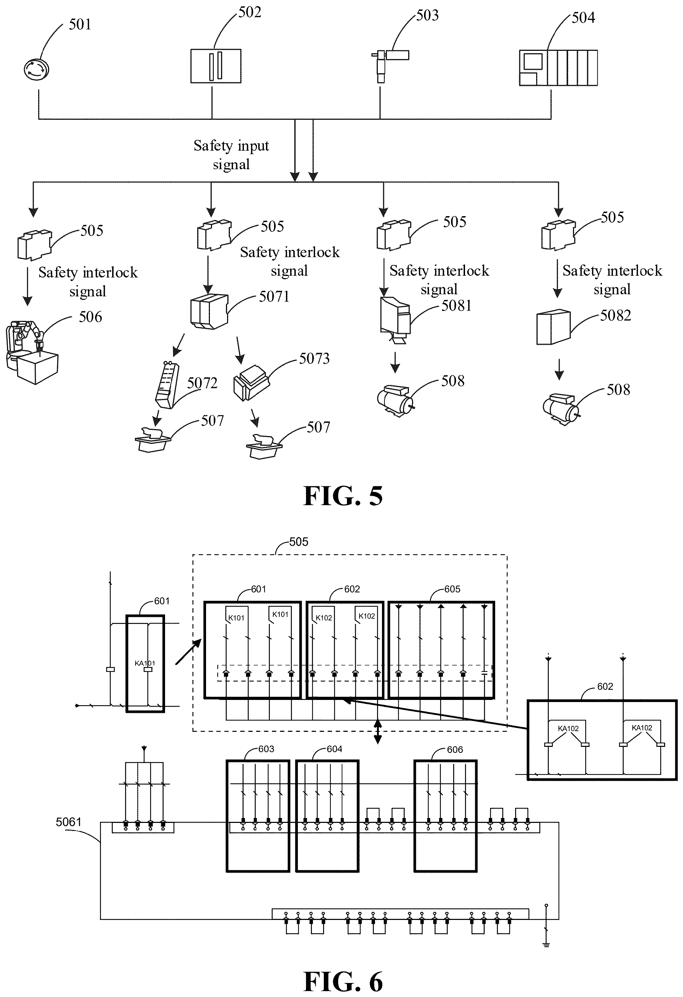

FIG. 5 is a schematic diagram of a safety control principle according to an embodiment of the present disclosure. As shown in FIG. 5, an emergency stop switch 501, a light curtain device 502, a safety door lock device 503, and an upstream and downstream signal 504 in the safety region are connected to relays 505. The relay 505 outputs safety interlocking signals to the devices in the safety region in responses to a safety signal sent by the emergency stop switch 501, the light curtain device 502 or the safety door lock device 503, as well as the upstream and downstream signal 504.

A controller of a production line robot 506 controls safe start/stop of the production line robot 506 through a safety-related signal of the relay 505. The safety-related signal refers to the safety control signal generated by the safety trigger event occurring in the safety region or an emergency stop signal generated by other robot bodies.

Safety control of cylinders 507 is based on a safety interlock signal of the relay 505. A load output power supply (such as, DC24V output) of a valve terminal 5072 or a remote I/O module 5073 is controlled by a switching power supply 5071, thereby controlling safe start/stop of the cylinder 507. The safety interlock signal refers to the control signal sent by the safety relay to other devices after receiving the safety control signal generated by the safety trigger event occurring in the safety region or the emergency stop signal generated by other robot bodies.

Safety control of motors 508 is based on the safety interlock signal of the relay 505, shutdown of STO input ports of a frequency converter 5081 and a servo controller 5082 of the motor is controlled to control safe start/stop of the frequency converter and the servo controller.

Based on the above embodiments, FIG. 6 is a schematic diagram of a safety control principle of a robot according to an embodiment of the present disclosure. As shown in FIG. 6, an external emergency stop signal 601 and an external safety door lock signal 602 are associated and output to a controller 5061 of the production line robot 506 through the relay 505. After receiving an external emergency stop input signal 603 and an external safety door lock input signal 604 sent by the safety relay, the controller of the robot executes the internal safety logic of the robot to perform safe start or stop of the robot.

As shown in FIG. 6, in response to that an emergency stop button in the safety region is pressed, a coil KA101 corresponding to the external emergency stop signal 601 is triggered, and a normally open contact K101 corresponding to the external emergency stop signal 601 is closed. At this time, the external emergency stop signal 601 is input to the controller of the robot, namely, the external emergency stop input signal 603 of the controller of the robot. The controller of the robot can control, based on the external emergency stop input signal 603, emergency stop of the robot.

In response to that the safety door lock of the safety region is opened, a coil KA102 corresponding to the external safety door lock signal 602 is triggered, and a normally open contact K102 corresponding to the external safety door lock signal 602 is closed. At this time, the external safety door lock signal 602 is input to the controller of the robot, namely, the external safety door lock input signal 604 of the controller of the robot. The controller of the robot can control, based on the external safety door lock input signal 604, emergency stop of the robot.

In some embodiments, a robot body emergency stop output signal 606 (from the emergency stop button of a robot body) is output to the relay 505, as a safety input signal source of the relay 505. After receiving a robot body emergency stop signal 605 from the robot, the relay 505 outputs the safety control signal to the robot (the robot is robots other than the robot of which the emergency stop button is pressed), the valve terminal, and the remote I/O module, to perform safety interlock control on the cylinder and the valve terminal in the safety region.

In response to that the emergency stop button of the robot body is pressed, the controller of the robot generates the robot body emergency stop output signal 606, the relay 505 receives the robot body emergency stop output signal 606, and outputs the robot body emergency stop signal 605 to other robots, the cylinder, and the motor in the safety region, and controllers of other robots, the controller of the cylinder, and the controller of the motor control, based on the robot body emergency stop signal 605, emergency stop of other robots, the cylinder, and the motor.

As shown in FIG. 6, the controller of the robot is connected to the relay 505 using two circuits. When safe control of the production line is performed, both the two circuits need to be triggered to implement the safety control method according to the embodiment of the present disclosure.

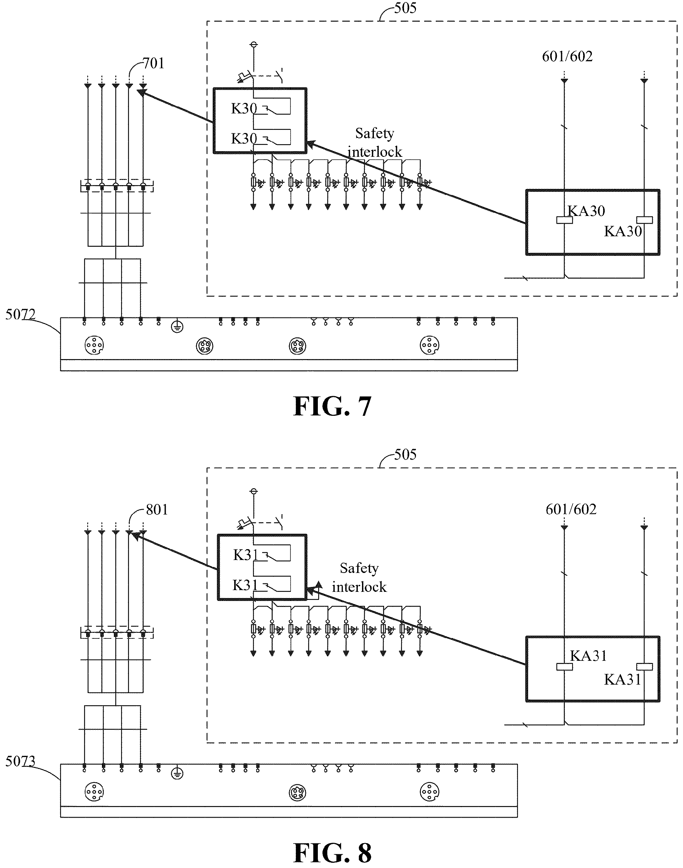

Based on the above embodiment, FIG. 7 is a schematic diagram of a safety control principle of the valve terminal according to an embodiment of the present disclosure. As shown in FIG. 6 and FIG. 7, the safety control corresponding to the valve terminal 5072 is also safety interlock control performed through the external emergency stop signal 601 and/or the external safety door lock signal 602 of the relay 505. The relay 505 receives the external emergency stop signal 601 and/or the external safety door lock signal 602, and a coil KA30 corresponding to the external safety door lock signal or the external emergency stop signal is triggered, and a normally open contact K30 corresponding to the external safety door lock signal or the external emergency stop signal is closed. At this time, based on the state of the normally open contact K30, a load DC24V (i.e., load power supply 701) output of the valve terminal is closed, thereby achieving safe control over the action of the valve terminal 5072.

Based on the above embodiment, FIG. 8 is a schematic diagram of a safety control principle of the remote I/O module according to an embodiment of the present disclosure. As shown in FIG. 6 and FIG. 8, the safety control corresponding to the remote I/O module 5073 is also safety interlock control performed through the external emergency stop signal 601 and/or the external safety door lock signal 602 of the relay 505. The relay 505 receives the external emergency stop signal 601 or the external safety door lock signal 602, and a coil KA31 corresponding to the external safety door lock signal or the external emergency stop signal is triggered, and a normally open contact K31 corresponding to the external safety door lock signal or the external emergency stop signal is closed. At this time, based on the state of the normally open contact K31, a load DC24V (i.e., load power supply 801) output of the remote I/O module 5073 is closed, thereby achieving safe control over the action of the remote I/O module 5073.

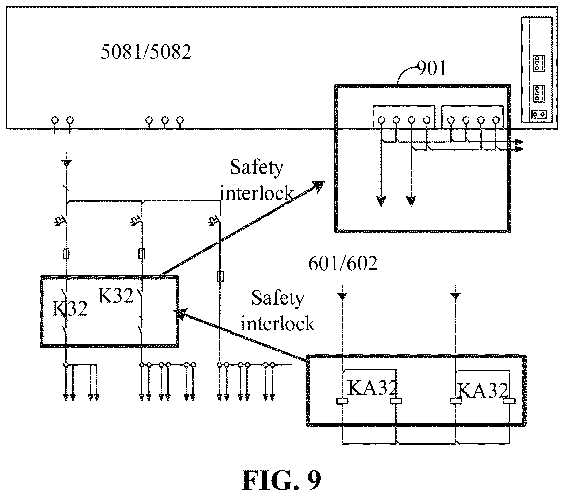

Based on the above embodiment, FIG. 9 is a schematic diagram of a safety control principle of the frequency converter and the servo controller according to an embodiment of the present disclosure. As shown in FIG. 6 and FIG. 9, the safety control corresponding to the frequency converter 5081 or the servo controller 5082 is safety interlock control performed through the external emergency stop signal 601 and the external safety door lock signal 602 of the relay 505. The relay 505 receives the external emergency stop signal or the external safety door lock signal, a coil KA32 corresponding to the external safety door lock signal or the external emergency stop signal is triggered, and a normally open contact K32 corresponding to the external safety door lock signal or the external emergency stop signal is closed. At this time, an STO control terminal 901 of the frequency converter and the servo controller is controlled based on the state of the normally open contact, thereby achieving safety control over the frequency converter and the servo controller. For example, after the normally open contact K32 is closed, the input of the STO control terminal of the frequency converter and the servo controller is closed, so that the frequency converter and the servo controller stop.

In the embodiment of the present disclosure, the battery production line is partitioned, and the safety trigger event corresponding to the emergency stop device, the light curtain, the safety door lock, and the upstream and downstream safety signal in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

It is to be noted here that the description of the system in the embodiments of the present disclosure is similar to the description of the above method embodiments, with similar beneficial effects as the method embodiments, and thus will not be repeated. For technical details not disclosed in apparatus embodiments, please refer to the description of the method embodiments of the present disclosure for understanding.

The above descriptions are merely the embodiments of the present disclosure, but are not intended to limit the scope of protection of the present disclosure. Any modifications, equivalent replacements and improvements made within the spirit and scope of the present disclosure shall be included within the scope of protection of the present disclosure.

### Industrial applicability

In the above embodiment, the battery production line is partitioned, and the safety trigger event in each safety region is detected. In response to the safety trigger event occurring in the safety region, safety control is performed on the robot in the safety region, so that safety isolation is achieved between the robot and devices and personnel in the safety region, thereby ensuring the safety of the devices, operators and maintenance personnel of the production line, improving the reliability of the entire battery production line, and providing a reliable safety control protection mechanism for the robot and mechanical devices on the production line.

## Claims

1. A safety control system for a battery production line, wherein the battery production line comprises at least one independent safety region, and the safety control system at least comprises a safety control unit, a production device, and a safety relay corresponding to the production device in the safety region, the production device at least comprising a robot, wherein:
the safety control unit is configured to generate a safety control signal in response to a safety trigger event;
the safety relay is connected to the safety control unit and configured to send a shutdown control signal to a controller of the robot in response to the safety control signal; and
the controller of the robot is connected to the safety relay and configured to control, in response to the shutdown control signal, the robot to be in a safe state.

2. The safety control system according to claim 1, further comprising a safety detection unit arranged in the safety region, wherein:
the safety detection unit is connected to the safety control unit and configured to detect an entrance of the safety region and obtain a detection result; and
the safety detection unit is further configured to generate the safety trigger event in response to the detection result indicating that a detection object enters the safety region from the entrance of the safety region, and send the safety trigger event to the safety control unit.

3. The safety control system according to claim 1 or 2, wherein the safety control unit is further configured to generate the safety control signal in response to an entry instruction sent by a transport cart, wherein the transport cart is configured to transport materials for the battery production line.

4. The safety control system according to any one of claims 1 to 3, wherein the controller of the robot is further configured to control, in response to the shutdown control signal, the robot to be in a stop state or move to a safe position.

5. The safety control system according to any one of claims 1 to 4, wherein:
the safety region comprises at least two production devices;
the robot is provided with a robot control unit;
the controller of the robot is configured to generate a robot control signal in response to a control operation for the robot control unit; and
the safety relay is further configured to send the shutdown control signal to production devices in the safety region other than the robot in response to the robot control signal sent by the controller of the robot.

6. The safety control system according to any one of claims 1 to 5, wherein the at least one independent safety region comprises a first safety region and a second safety region adjacent to each other, wherein:
a safety control unit of the first safety region is configured to generate a safety control signal of the first safety region in response to a safety trigger event of the first safety region; and
a safety control unit of the second safety region is configured to receive the safety control signal sent by the safety control unit of the first safety region, and generate a safety control signal of the second safety region in response to the safety control signal of the first safety region.

7. The safety control system according to any one of claims 1 to 6, wherein the production device further comprises a cylinder and a motor, wherein the controller of the robot, a controller of the cylinder, and a controller of the motor are respectively connected to different safety relays, wherein:
the safety relay connected to the controller of the cylinder is configured to send the shutdown control signal to the controller of the cylinder in response to the safety control signal; and
the safety relay connected to the controller of the motor is configured to send the shutdown control signal to the controller of the motor in response to the safety control signal.

8. A safety control method for a battery production line, applied to a safety control system for a battery production line, wherein:
the battery production line comprises at least one independent safety region;
the safety control system at least comprises a safety control unit, a production device, and a safety relay corresponding to the production device in the safety region, the production device at least comprising a robot; and
the method comprises:
generating, by the safety control unit, a safety control signal in response to a safety trigger event;
sending, by the safety relay, a shutdown control signal to a controller of the robot in response to the safety control signal; and
controlling, by the controller of the robot in response to the shutdown control signal, the robot to be in a safe state.

9. The safety control method according to claim 8, wherein the safety control system further comprises a safety detection unit arranged in the safety region, and the method further comprises:
detecting, by the safety detection unit, an entrance of the safety region and obtaining a detection result; and
generating, by the safety detection unit, the safety trigger event in response to the detection result indicating that a detection object enters the safety region from the entrance of the safety region, and sending the safety trigger event to the safety control unit.

10. The safety control method according to claim 8 or 9, wherein:
the safety region comprises at least two production devices, and the robot is provided with a robot control unit; and
the method further comprises:
generating, by the controller of the robot, a robot control signal in response to a control operation for the robot control unit; and
sending, by the safety relay, the shutdown control signal to production devices in the safety region other than the robot in response to the robot control signal sent by the controller of the robot.
